# EUROPEAN PATENT APPLICATION

(11) **EP 4 456 624 A1**
(43) Date of publication of application: **30.10.2024**
(21) Application number: 22909647.4
(22) Date of filing: 24.11.2022
(51) Int. Cl.: H04W 64/00, H04W 24/10

(54) **POSITIONING METHOD AND APPARATUS**

(30) Priority: 21.12.2021 CN 202111570673
(71) Applicant: Datang Mobile Communications Equipment Co., Ltd., Beijing 100085 (CN)
(72) Inventor: HUANG, Yuanfang, Beijing 100085 (CN)
(74) Representative: Studio Torta S.p.A.
(86) International application number: PCT/CN2022/133988
(87) International publication number: WO 2023/116332

(57) **Abstract**

The present disclosure provides a location method and device. The method includes: obtaining, by a location function entity of a near real time RAN intelligent Controller (Near-RT RIC), a location request message for a target user equipment (UE); obtaining, by the location function entity, location measurement information related to the target UE according to the location request message; estimating, by the location function entity, a location of the target UE to obtain location information according to the location measurement information.

## Description

### CROSS-REFERENCE TO RELATED APPLICATION

The present disclosure claims the priority of Chinese Application No. 202111570673.7, filed on December 21, 2021, the disclosure of which is incorporated in its entirety by reference herein.

### TECHNICAL FIELD

The present disclosure relates to the field of communication technologies, and in particular to a location method and device.

### BACKGROUND

Near Real Time RAN Intelligent Controller (Near-RT RIC) in Open Radio Access Network (O-RAN) is used to control and optimize functions and resources of E2 nodes in near real time (Node), such as radio resource management (RRM) related resource optimization. The Near-RT RIC hosts one or more applications (xApp) and collects near real-time information through an E2 termination.

For use case requirements of Near-RT RIC, it may be necessary to collect measurement information related to UE's location from a base station to obtain UE's location information and provide the UE's location information to smart applications or other applications that needs the UE's location information on the Near-RT RIC. However, in the current Near-RT RIC architecture, functions and interfaces related to location are not defined, and thus the above requirements for UE's locations cannot be met.

### SUMMARY

An object of the present disclosure is to provide a location method and device, which can solve the problem that in the Near-RT RIC architecture in the related art cannot meet requirements for UE's locations.

One embodiment of the present disclosure provide a location method, including:
obtaining, by a location function entity of a near real time RAN intelligent Controller (Near-RT RIC), a location request message for a target user equipment (UE);
obtaining, by the location function entity, location measurement information related to the target UE according to the location request message;
estimating, by the location function entity, a location of the target UE to obtain location information according to the location measurement information.

Optionally, the obtaining a location request message for a target user equipment (UE), incudes:
receiving the location request message sent by a first application program; wherein the first application program is carried on the Near-RT RIC.

Optionally, the method further includes:
sending the location information to the first application program.

Optionally, the obtaining location measurement information related to the target UE according to the location request message, includes:
obtaining the location measurement information from a network node through a first interface according to the location request message information.

Optionally, the obtaining the location measurement information from a network node through a first interface according to the location request message information, includes:
generating a RIC subscription request message according to the location request message;
sending the RIC subscription request message to the network node through the first interface;
receiving the location measurement information sent by the network node through the first interface.

Optionally, the generating a RIC subscription request message according to the location request message, includes:
when there are at least two location request messages and the at least two location request messages are from different application programs, combining the at least two location request messages to generate the RIC subscription request message.

Optionally, the receiving the location measurement information sent by the network node through the first interface, includes:
receiving an RIC indication message sent by the network node through the first interface, wherein the RIC indication message including the location measurement information.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

Optionally, the method further includes:
obtaining location assistance information related to the target UE through a second interface according to the location request message;
the estimating a location of the target UE to obtain location information according to the location measurement information, includes:
performing location estimation on the target UE according to the location measurement information and the location assistance information to obtain location information.

Optionally, the obtaining location assistance information related to the target UE through a second interface according to the location request message, includes:
sending an assistance information request message to the second interface according to the location request message;
receiving an assistance information response message sent by the second interface, wherein the assistance information response message includes the location assistance information.

Optionally, the sending the location information to the first application program, includes:
sending a location response message to the first application program, wherein the location response message includes the location information.

Optionally, the location request message includes at least one of the following information:
message type;
information of a first application program corresponding to the location request message;
choice event trigger definition;
list of UEs requesting location.
granularity period.

Optionally, the information of the first application program includes at least one of the following:
a first application identifier;
location request message identifier.

Optionally, the choice event trigger definition includes at least one of the following:
periodic report;
event trigger report.

Optionally, the RIC subscription request message includes at least one of the following:
message type;
subscription request message identifier;
RAN function ID;
subscription related information.

Optionally, the subscription related information includes: event trigger definition and/or sequence of actions.

Optionally, the sequence of actions includes at least one of the following:
action ID;
action type;
action definition;
subsequent action.

Optionally, the action definition includes at least one of the following:
UE ID;
measurement information mapping;
list of labels;
granularity period;
cell global ID.

Optionally, the RIC indication message includes at least one of the following:
measurement data;
measurement information mapping;
matching condition list;
granularity period.

Optionally, the measurement data includes at least one of the following:
measurement record;
incomplete indication.

Optionally, the measurement record includes choice measured value, and the choice measured value includes one of the following:
integer value;
real value;
no value.

Optionally, the measurement information mapping includes N bits of information, and each bit of information is used to indicate a piece of measurement information;
wherein N is an integer greater than or equal to 1.

Optionally, the location response message includes at least one of the following:
message type;
information of a first application program corresponding to the location request message;
list of responded UE Locations;
location Information.

Optionally, the location information includes at least one of the following:
latitude information;
longitude information;
altitude information.

One embodiment further provide a location method, includes:
sending, by a network node, location measurement information related to a target UE to a location function entity of a Near-RT RIC.

Optionally, the method further includes:
receiving a RIC subscription request message sent by the location function entity through a first interface;
wherein the sending location measurement information related to a target UE to a location function entity of a Near-RT RIC, includes:
sending the location measurement information to the location function entity through the first interface according to the RIC subscription request message.

Optionally, the sending the location measurement information to the location function entity through the first interface, includes:
sending a RIC indication message to the location function entity through the first interface, wherein the RIC indication message includes the location measurement information.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

Optionally, the RIC subscription request message includes at least one of the following:
message type;
subscription request message identifier;
RAN function ID;
subscription related information.

Optionally, the subscription related information includes: event trigger definition and/or sequence of actions.

Optionally, the sequence of actions includes at least one of the following:
action ID;
action type;
action definition;
subsequent action.

Optionally, the action definition includes at least one of the following:
UE ID;
measurement information mapping;
list of labels;
granularity period;
cell global ID.

Optionally, the method further includes:
determining measurement information that needs to be reported according to the measurement information mapping.

Optionally, the RIC indication message includes at least one of the following:
measurement data;
measurement information mapping;
matching condition list;
granularity period.

Optionally, the measurement data includes at least one of the following:
measurement record;
incomplete indication.

Optionally, the measurement record includes choice measured value, and the choice measured value includes one of the following:
integer value;
real value;
no value.

Optionally, the measurement information mapping includes N bits of information, and each bit of information is used to indicate a piece of measurement information;
wherein N is an integer greater than or equal to 1.

One embodiment of the present disclosure further provides a location method, including:
sending, by a second interface, location assistance information related to a target UE to a location function entity of a Near-RT RIC.

Optionally, the method further includes:
receiving an assistance information request message sent by the location function entity;
according to the assistance information request message, sending an assistance information response message to the location function entity, wherein the assistance information response message includes the location assistance information.

One embodiment of the present disclosure further provides a location device, including: a memory, a transceiver, and a processor;
wherein the memory is used to store computer programs; the processor is used to read the computer programs in the memory; the transceiver is used to send and receive data under control of the processor and perform the following operations:
obtaining a location request message for a target user equipment (UE);
wherein the processor is used to read the computer programs in the memory and perform the following operations:
obtaining location measurement information related to the target UE according to the location request message;
estimating a location of the target UE to obtain location information according to the location measurement information.

Optionally, when the transceiver obtains the location request message for the target UE, the transceiver is specifically configured to perform:
receiving the location request message sent by a first application program; wherein the first application program is carried on a Near-RT RIC.

Optionally, the transceiver is further configured to perform:
sending the location information to the first application program.

Optionally, the processor is used to read the computer programs in the memory and perform the following operations:
obtaining the location measurement information from a network node through a first interface according to the location request message information.

Optionally, the processor is used to read the computer programs in the memory and perform the following operations:
generating a RIC subscription request message according to the location request message;
wherein the transceiver is configured to perform: sending the RIC subscription request message to the network node through the first interface;
receiving the location measurement information sent by the network node through the first interface.

Optionally, the processor is used to read the computer programs in the memory and perform the following operations:
when there are at least two location request messages and the at least two location request messages are from different application programs, combining the at least two location request messages to generate the RIC subscription request message.

Optionally, the transceiver is configured to perform: receiving an RIC indication message sent by the network node through the first interface, wherein the RIC indication message including the location measurement information.

Optionally, the processor is used to read the computer programs in the memory and perform the following operations:
obtaining location assistance information related to the target UE through a second interface according to the location request message;
performing location estimation on the target UE according to the location measurement information and the location assistance information to obtain location information.

Optionally, the transceiver is further configured to perform:
sending an assistance information request message to the second interface according to the location request message;
receiving an assistance information response message sent by the second interface, wherein the assistance information response message includes the location assistance information.

Optionally, the transceiver is further configured to perform:
sending a location response message to the first application program, wherein the location response message includes the location information.

Optionally, the location request message includes at least one of the following information:
message type;
information of a first application program corresponding to the location request message;
choice event trigger definition;
list of UEs requesting location.
granularity period.

Optionally, the RIC subscription request message includes at least one of the following:
message type;
subscription request message identifier;
RAN function ID;
subscription related information.

Optionally, the RIC indication message includes at least one of the following:
measurement data;
measurement information mapping;
matching condition list;
granularity period.

5 Optionally, the location response message includes at least one of the following:
message type;
information of a first application program corresponding to the location request message;
list of responded UE Locations;
location Information.

One embodiment of the present disclosure provides a location device, including: a memory, a transceiver, and a processor;
wherein the memory is used to store computer programs; the processor is used to read the computer programs in the memory; the transceiver is used to send and receive data under control of the processor and perform the following operations:
sending location measurement information related to a target UE to a location function entity of a Near-RT RIC.

Optionally, the transceiver is further configured to perform:
receiving a RIC subscription request message sent by the location function entity through a first interface;
sending the location measurement information to the location function entity through the first interface according to the RIC subscription request message.

Optionally, the transceiver is further configured to perform:
sending a RIC indication message to the location function entity through the first interface, wherein the RIC indication message includes the location measurement information.

Optionally, the RIC subscription request message includes at least one of the following:
message type;
subscription request message identifier;
RAN function ID;
subscription related information.

Optionally, the RIC indication message includes at least one of the following:
measurement data;
measurement information mapping;
matching condition list;
granularity period.

One embodiment of the present disclosure provides a location device, including: a memory, a transceiver, and a processor;
wherein the memory is used to store computer programs; the processor is used to read the computer programs in the memory; the transceiver is used to send and receive data under control of the processor and perform the following operations:
sending location assistance information related to a target UE to a location function entity of a Near-RT RIC.

Optionally, the transceiver is further configured to perform:
receiving an assistance information request message sent by the location function entity;
according to the assistance information request message, sending an assistance information response message to the location function entity, wherein the assistance information response message includes the location assistance information.

One embodiment of the present disclosure provides a location device, including:
a first obtaining unit configured to obtain a location request message for a target UE;
a second obtaining unit configured to obtain location measurement information related to the target UE according to the location request message;
a first processing unit configured to estimate a location of the target UE to obtain location information according to the location measurement information.

One embodiment of the present disclosure provides a location device, including:
a first sending unit configured to send location measurement information related to a target UE to a location function entity of a near real time RAN intelligent Controller (Near-RT RIC).

One embodiment of the present disclosure provides a location device, including:
a second sending unit configured to send the location assistance information related to a target UE to a location function entity of a near real time RAN intelligent Controller (Near-RT RIC).

One embodiment of the present disclosure further provides a processor-readable storage medium, including a computer program stored thereon; wherein the computer program, when executed by a processor, cause the processor to perform the steps of the above method.

The beneficial effects of the above technical solution disclosed in the present application are as follows.

In the embodiment of the present invention, the location function entity is set in the Near-RT RIC, and the location function entity obtains the location measurement information related to the target UE according to the location request message, thereby performing location estimation on the target UE and obtaining the location information of the target UE, thereby realizing the location function of the Near-RT RIC and meeting the location requirements.

### BRIEF DESCRIPTION OF THE DRAWINGS

FIG. 1 shows a schematic diagram of an internal architecture of an existing Near-RT RIC;
FIG. 2 is a first flow chart of a location method according to an embodiment of the present disclosure;
FIG. 3 shows a schematic diagram of an architecture of a Near-RT RIC according to an embodiment of the present disclosure;
FIG. 4 is a second flow chart of a location method according to an embodiment of the present disclosure;
FIG. 5 is a third flow chart of a location method according to an embodiment of the present disclosure;
FIG. 6 is a fourth flow chart of a location method according to an embodiment of the present disclosure;
FIG. 7 is a first schematic diagram of a location device according to an embodiment of the present disclosure;
FIG. 8 is a second schematic diagram of a location device according to an embodiment of the present disclosure;
FIG. 9 is a third schematic diagram of a location device according to an embodiment of the present disclosure;
FIG. 10 is a fourth schematic diagram of a location device according to an embodiment of the present disclosure;
FIG. 11 is a fifth schematic diagram of a location device according to an embodiment of the present disclosure; and
FIG. 12 is a sixth schematic diagram of a location device according to an embodiment of the present disclosure.

### DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "j" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

When describing the embodiments of the present disclosure, some concepts used in the following description will first be explained.

### Near-RT RIC:

The Near-RT RIC in the O-RAN architecture controls an E2 node through an E2 termination, thereby achieving the purpose of RAN radio resource optimization.

Nodes connected by the E2 termination include:
O-RAN Central Unit-Control Plane (O-CU-CP);
O-RAN Central Unit-User Plane (O-CU-UP);
O-RAN Distributed Unit (O-DU);
O-eNB.

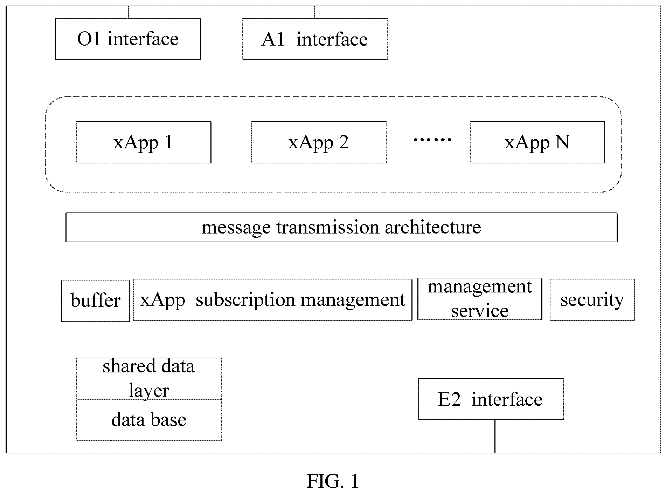

An internal architecture of Near-RT RIC is shown in FIG. 1. Near-RT RIC can carry multiple apps. Near-RT RIC has O1 interface, A1 termination and E2 termination. Near-RT RIC includes App subscription management function module, management service module, buffer and security module.

In the related art, when Near-RT RIC implements network control, RIC action definition is shown in Table 1. E2SM-KPM indication message format 3 is shown in Table 2. E2SM-KPM indication message format 1 is shown in Table 3.

**Table 1: Existing RIC Action Definitions**

| Indication Message (IE)/Group name | Presence | Range | IE type and reference | semantic description |
|---|---|---|---|---|
| User Equipment Identity document (UE ID) | M | | | point to a specific UE of interest |
| measurement information list | | 1 to a maximum number of measurement information | | |
| > choice measured type | | | | |
| >> measurement name | M | | printable string (size | one of measurement |
| | | | (1..150, ...)) | names specified in relevant protocol |
| >> measurement ID | M | | measurement type ID | |
| > List of Labels | | 1 to a maximum number of label information | | |
| >> label information | M | | Measurement label | |
| Granularity Period | M | | Granularity Period | collection granularity of measurement |
| Cell Global ID | O | | Cell Global ID | point to a specific cell used to generate a measurement information list through measurement subscription |

**Table 2: Existing E2SM-KPM indication message format 3**

| IE/Group name | Presence | Range | IE type and reference | semantic description |
|---|---|---|---|---|
| measurement report list | | 1 to a maximum number of UE measurement reports | | |
| >UE ID | M | | | |
| > Measurement report | M | | E2SM-KPM indication message format1 | Including measurement data of UE during reporting period |

**Table 3: Existing E2SM-KPM Indication Message Format 1**

| IE/Group name | Presence | Range | IE type and reference | semantic description |
|---|---|---|---|---|
| measurement data | | 1 to a maximum number of measurement records | | include a set of measurement records, each of which is collected at each granularity |
| | | | | Period |
| > Measurement Record | | 1 to a maximum number of measurement values | | Include measurement values in the same order as in measurement information list (if any), otherwise in t order defined in a subscription |
| >>choice measured Value | | | | |
| >>> Integer Value | M | | | |
| >>> Real Value | M | | REAL | |
| >>>No Value | M | | NULL | |
| > Incomplete Flag | O | | For example (true, ...) | indicate that measurement record is unreliable. |
| Measurement information list | | 0 to a maximum number of measurement information | | |
| > choice measured type | | | | |
| >> measurement name | M | | measurement type name | |
| >> measurement ID | M | | measurement type ID | |
| > List of Labels | | 1 to a maximum number of label information | | |
| >> label information | M | | Measurement label | |
| Granularity Period | O | | Granularity Period | collection granularity of measurement |

It is to be noted that, in the tables of the embodiments of the present application, "M" indicates mandatory existence, and "O" indicates whether existence is optional.

">", ">>", "> > >" and the like indicate levels of various information, for example, in the table 3, "measurement record", "incomplete flag" and "choice measured type" are "measurement data" are a next level of "measurement data", that is, the measurement data includes a measurement record, an incomplete flag and choice measured type. "Integer Value", "Real Value" and "No Value" are a next level of "choice measured Value", that is, the choice measured value includes three optional measurement values. The choice measured type includes a measurement name and a measurement ID. The message levels in the remaining lists in the embodiments of the present disclosure are similar and will not be described in detail here.

Specifically, the embodiments of the present disclosure provide a location method, which solves the problem that the Near-RT RIC architecture in the related art cannot meet the requirement for UE's location.

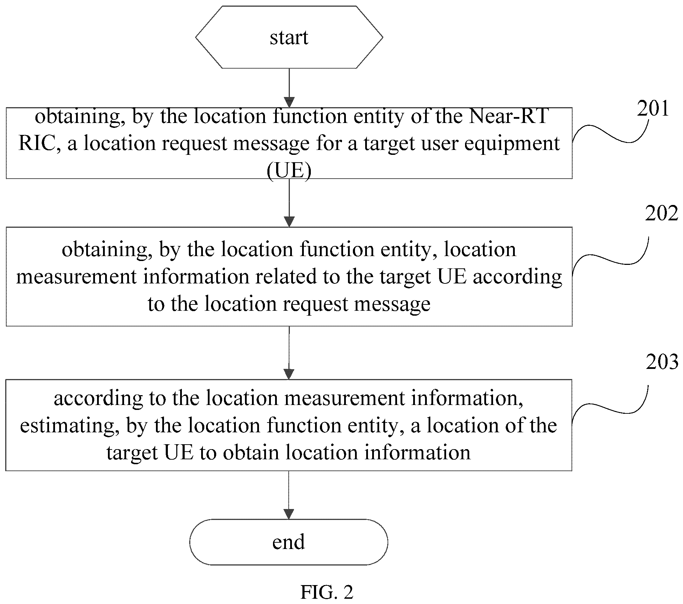

As shown in FIG. 2, one embodiment of the present disclosure provides a location method, which is applied to a location function entity of a near real time RAN intelligent Controller (Near-RT RIC). The method specifically includes the following steps.

Step 201: obtaining, by the location function entity of the Near-RT RIC, a location request message for a target user equipment (UE).

In this embodiment, the Near-RT RIC includes a location function (LF) entity. The target UE is a UE for which location information needs to be determined. The target UE may refer to one UE, or may include multiple UEs. The location function entity obtains a location request message for the target UE.

Step 202: obtaining, by the location function entity, location measurement information related to the target UE according to the location request message.

Step 203: according to the location measurement information, estimating, by the location function entity, a location of the target UE to obtain location information.

The location measurement information may be obtained by the location function entity from a network node, and the network node may be an E2 node.

The location function entity estimates the location of the UE according to the location measurement information, and obtains the location information of the target UE.

In the embodiment of the present application, the location function entity is set in the Near-RT RIC, and the location function entity obtains the location measurement information related to the target UE according to the location request message, thereby performing location estimation on the target UE and obtaining the location information of the target UE, thereby realizing the location function of the Near-RT RIC and meeting the location requirements.

Optionally, the obtaining the location request message for the target UE includes: receiving the location request message sent by a first application program; where the first application program is carried on the Near-RT RIC.

Optionally, the method further includes: sending the location information to the first application program.

In this embodiment, the Near-RT RIC may carry one or more application programs, and the location request message may be sent by the first application program among the application programs, that is, the first application program needs to obtain the location information of the target UE. The first application program may refer to one application program, or may refer to multiple application programs. The location function entity receives the location request message from the first application program, and obtains relevant location measurement information of the target UE and other location assistance information (such as the UE's historical trajectory, speed, map), thereby performing location estimation on the target UE. After obtaining the location information, the location function entity may feed back the location information to the first application program.

Optionally, the sending the location information to the first application program includes: sending a location response message to the first application program, where the location response message includes the location information.

When the location function entity feeds back the location information of the target UE to the first application program, the location function entity may send a location response message to the first application program, and the location information is carried in the location response message.

As an optional embodiment, the obtaining location measurement information related to the target UE according to the location request message includes: according to the location request message information, obtaining the location measurement information from a network node through a first interface.

The first interface may be an E2 termination, and the network node may be an E2 node (which may include O-CU and O-DU), that is, the location function entity obtains the location measurement information from the E2 node through the E2 termination.

Further, the obtaining the location measurement information from the network node through the first interface according to the location request message may include:
Step 1: generating a RIC subscription request message according to the location request message.

Optionally, the generating the RIC subscription request message according to the location request message includes:
when there are at least two location request messages and the at least two location request messages are from different application programs, combining the at least two location request messages to generate the RIC subscription request message.

In this embodiment, when the location function entity obtains the location measurement information through the first interface, the location function entity may generate a subscription request message according to the location request. When there are multiple location request messages, the location function entity may combine location requests from multiple application programs at the same time, thereby avoiding redundancy caused by repeated information and improving location efficiency.

The RIC subscription request message may include information content requested to be reported by the network node, such as OTDOA, AoD, TOA, UTDOA, etc.

Step 2: sending the RIC subscription request message to the network node through the first interface.

Step 3: receiving the location measurement information sent by the network node through the first interface.

Optionally, receiving the location measurement information sent by the network node through the first interface includes: receiving an RIC indication message sent by the network node through the first interface, where the RIC indication message including the location measurement information.

The location function node sends the RIC subscription request message to the first interface, and the first interface forwards the RIC subscription request message to the network node. The network node determines the location measurement information to be fed back according to the information items requested in the RIC subscription request message and feeds back a RIC indication message to the first interface, where the RIC indication message includes the location measurement information related to the target UE.

Optionally, in this embodiment of the present application, the location measurement information includes at least one of the following:
observed time difference of arrival (OTDOA);
angle of arrival (AOA);
angle of departure (AOD);
time of arrival (TOA);
uplink time difference of arrival (UTDOA).

As an optional embodiment, the method further includes: according to the location request message, obtaining location assistance information related to the target UE through a second interface. The performing location estimation on the target UE to obtain location information according to the location measurement information, includes: performing location estimation on the target UE according to the location measurement information and the location assistance information to obtain location information.

The second interface may be an A1 termination in the Near-RT RIC, or may be other external interfaces capable of obtaining location assistance information. The location assistance information is, for example: historical trajectory, speed, map, etc. of the target UE.

In this embodiment, the location function entity may further obtain location assistance information related to the target UE through the second interface, and use the location measurement information in combination with the location assistance information to estimate the location of the target UE, thereby obtaining the location information of the target UE.

Optionally, the obtaining the location assistance information related to the target UE through the second interface according to the location request message includes: sending an assistance information request message to the second interface according to the location request message; receiving an assistance information response message sent by the second interface, where the assistance information response message includes the location assistance information.

When obtaining the location assistance information, the location function entity may send an assistance information request message to the second interface, where the assistance information request message includes requested assistance information content. The second interface determines information content to be fed back according to the assistance information request message, and feeds back an assistance information response message to the location function entity, where the assistance information response message includes the location assistance information.

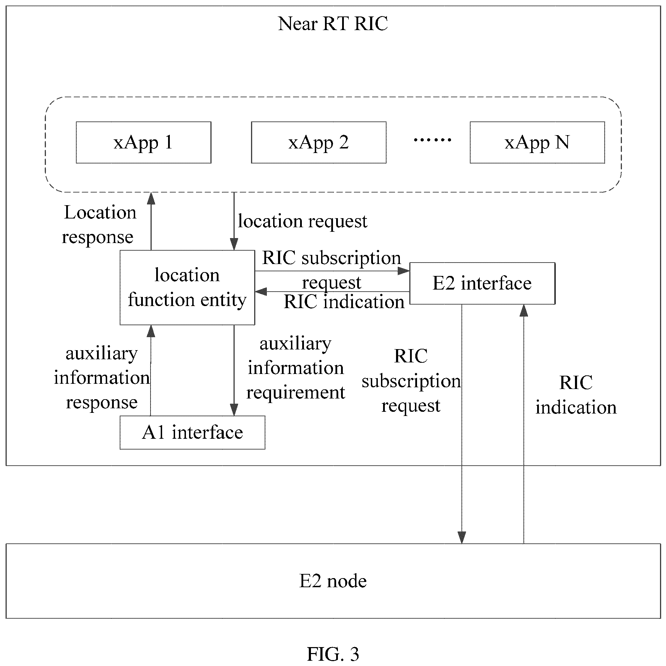

In an embodiment of the present application, the Near-RT RIC includes the location function entity, and further includes the first interface and the second interface for obtaining location-related messages. The location function entity exchanges information with the network node through the first interface. The Near-RT RIC carries one or more application programs. With an example in which the first interface is an E2 termination, the second interface is an A1 termination, and the network node is an E2 node, the structure of the Near-RT RIC is shown in FIG. 3. An implementation process of realizing the location function by the Near-RT RIC is described in detail hereinafter with an embodiment.

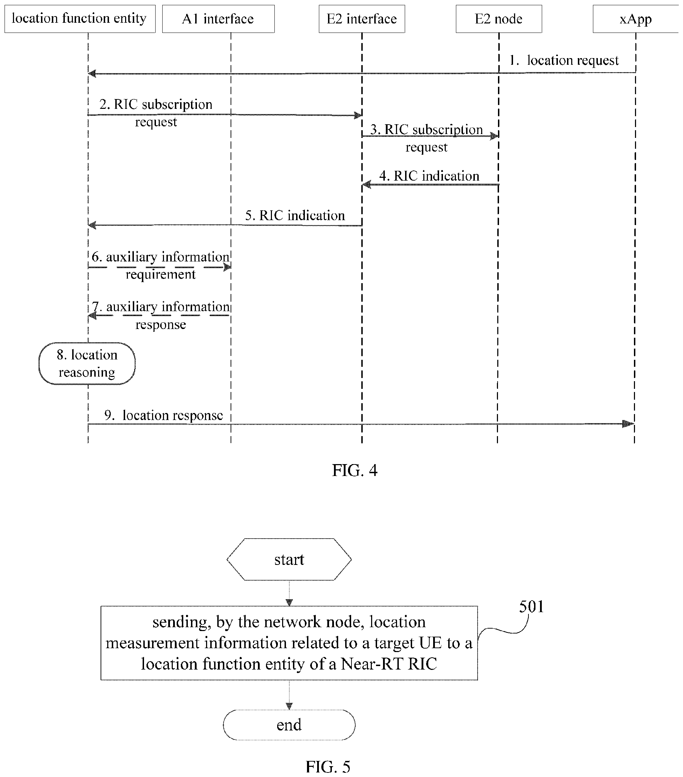

For an O-RAN use case of traffic steering optimization, a traffic steering optimization application (xApp) is deployed on the Near-RT RIC. The xApp needs to obtain location information of a UE as input information of traffic steering optimization reasoning, to enhance reasonableness and usability of traffic steering optimization results. The processing flow is shown in FIG. 4 and described as follows.

At step 1, xApp (traffic steering optimization xApp) needs the location information of the UE in the reasoning process, and thus the xApp sends a location request message to the location function entity to request location information of one or more UEs.

At step 2, the location function entity combines the location request messages from multiple xApps at the same time to form a RIC subscription request message, sends it to the E2 termination, and requests a base station (here referring to an E2 node) to report location measurement information of the relevant UE, such as OTDOA, AOA, TOA, UTDOA, etc.

At step 3, the E2 termination forwards the RIC subscription request message to the E2 node.

At step 4, the E2 node sends a RIC indication message to the E2 termination to report the location measurement information of the UE, such as OTDOA, AOA, AOD, TOA, UTDOA, etc.

At step 5, the E2 termination forwards the RIC indication message to the location function entity.

At step 6, the location function entity applies to the A1 termination for UE location assistance information, such as the UE's historical trajectory, service, speed, or environmental map, through an assistance information request message.

At step 7, the A1 termination feeds back the location assistance information to the location function entity through an assistance information response message.

At step 8, after collecting the location measurement information and location assistance information, the location function entity performs reasoning and calculation of the UE position to obtain location information.

At step 9, the location function entity feeds back the location information of the UE to the xApp through a location response message. The xApp can use the location information to assist in completing the traffic steering optimization.

It is to be noted that, in this embodiment, as an example, the location function entity performs location estimation of the UE according to the location measurement information and location assistance information; and the location function entity may also perform location estimation of the UE only according to the location measurement information, at this point, steps 6-7 can be omitted.

It is to be noted that the above step of obtaining the location measurement information of the UE and the step of obtaining the location measurement information of the UE do not have a sequence, and may be determined according to a specific implementation process.

In the embodiment of the present application, specific meaning of each message in the process of realizing the location function by the Near-RT RIC is also defined, which will be described hereinafter in detail with an embodiment.

As an optional embodiment, in the embodiments of the present application, the location request message includes at least one of the following information:
(1) Message Type;
(2) Information (Request xApp Info) of a first application program corresponding to the location request message; where the information of the first application program may include at least one of the following:
   a first application identifier (xApp ID);
   location request message identifier (Request ID);
(3) Choice event trigger definition; where the choice event trigger definition may include at least one of the following items:
   periodic report;
   event trigger report;
(4) list of UEs requesting location.
(5) granularity period.

In this embodiment, the location request message is a message sent by the application program to the location function entity for requesting UE location information. The location request message can be expressed as the following table 4.

**Table 4: Location request message**

| IE/Group name | Presence | Range | semantic description |
|---|---|---|---|
| Message type | M | | location request |
| Information of xApp | | | |
| >xApp ID | M | | |
| > Location request message ID | M | | |
| Choice event trigger definition | | | |
| > periodic report | M | | |
| > event trigger report | M | | Periodic report with a reporting period expressed in 1 millisecond. |
| list of UEs requesting location | M | 1 to maximum number of UE measurement reports | |
| >UE ID | M | | |
| Granularity Period | M | INTEGER | collection granularity of measurement |

In the above table 4, "M" indicates mandatory existence, and "O" indicates whether existence is optional.

">", ">>", "> > >" and the like indicate levels of various information, for example, "xApp ID", and "Location request message ID" are a next level of "Information of xApp", that is, Information of xApp includes xApp ID and Location request message ID; "periodic report" and "event trigger report" are a next level of "Choice event trigger definition", that is, the Choice event trigger definition includes two optional reporting modes: periodic report and event trigger report. "UE ID" is a next level of "list of UEs requesting location", that is, the list of UEs requesting location can include one or more UEs, and include ID information of each UE. The message levels in the remaining lists in the embodiments of the present disclosure are similar and will not be described in detail here.

The content of the location request message is described hereinafter by taking requesting location information of two UEs as an example. As shown in Table 5, location information of two UEs is requested.

**Table 5: Location request message**

| IE/Group name | Presence | semantic description | Example |
|---|---|---|---|
| Message type | M | location request | location request |
| Information of xApp | | | |
| >xApp ID | M | | 7 |
| >Request ID | M | | 1 |
| Choice event trigger definition | | | |
| > periodic report | M | Periodic report with a reporting period in units of 1 second | 20 |
| > event trigger report | M | event trigger report with a reporting period in units of 1 second | |
| list of UEs requesting location | M | | |
| >UE ID 1 | | | 0x12345678 |
| >UE ID 2 | | | 0x87654321 |

As shown in Table 5, the location request message requests location information of two UEs, and the identities of the two UEs are UE ID 1 and UE ID 2 respectively. In addition, reporting time units of the periodic report and the event trigger report are defined in the location request message.

As an optional embodiment, the present application defines the RIC subscription request message. The RIC subscription request message is sent to the first interface (such as the E2 termination) by the location function entity, and the RIC subscription request message is sent to a network node (such as an E2 node) through the first interface. The RIC subscription request message can be implemented by partially multiplexing formats defined by the Near-RT RIC E2 Interface Application Protocol (E2AP) and E2 Interface Service Mode (E2SM)-Key Performance Monitor (KPM) technical specifications.

Optionally, the RIC subscription request message includes at least one of the following:
(1) Message Type;
(2) Subscription request message identifier (RIC Request ID);
(3) RAN function ID;
(4) Subscription related information (RIC Subscription details).

Optionally, the subscription related information includes: RIC event trigger definition) and/or sequence of actions.

Optionally, the sequence of actions includes at least one of the following:
1) RIC action ID;
2) RIC action type;
3) RIC action definition;
4) RIC subsequent action.

In this embodiment, the RIC subscription request message is shown in the following table 6.

**Table 6: RIC subscription request message**

| IE/Group name | Presence | Range | IE type anc reference | semantic description |
|---|---|---|---|---|
| Message type | M | | | |
| subscription request message ID | M | | | ID of Near-RT RIC request |
| RAN function ID | M | | | Here is KPM Monitor |
| RIC Subscription Details | M | | | |
| >RIC Event Trigger Definition | M | | | Here is E2SM-KPM trigger event definition format 1: Reporting Period |
| > Sequence of Actions | | 1 to maximum number of RIC action IDs | | |
| >>RIC Action ID | M | | | |
| >>RIC Action type | M | | | Here is: reporting service type 2: E2 node measurement of a single UE |
| >> RIC Action Definition | O | | | |
| >> RIC Subsequent Action | O | | | |

In the embodiment of the present application, an original measurement information list is redefined for the action definition in the above table 6, and the measurement quantity name represented by the existing character string is replaced by measurement information mapping, thereby improving transmission efficiency. The content of the action definition in the embodiment of the present application is described below.

As an optional embodiment, the action definition includes at least one of the following:
(1) UE ID;
(2) Measurement information mapping;
(3) list of labels, where the list of labels includes label information;
(4) granularity period;
(5) cell global ID.

Optionally, the measurement information mapping includes N bits of information, and each bit of information is used to indicate a piece of measurement information; where N is an integer greater than or equal to 1.

In this embodiment, the action definition is redefined. In the action definition, the original measurement information table represented by a character string is replaced by a measurement information mapping. The measurement information mapping refers to indicating measurement information through bit information. The measurement information mapping may include a plurality of bit information, each bit of information corresponds to indicate a measurement quantity and may indicate whether to report the measurement quantity. The action definition is shown in Table 7.

**Table 7: Redefined action definition**

| IE/Group name | Presence | Range | IE type and reference | semantic description |
|---|---|---|---|---|
| UE ID | M | | | point to a specific UE of interest |
| measurement information mapping | M | | | 64bits, each bit represents a measurement item; for example, "1" indicates that a measurement item needs to be reported, and "0" indicates that a measurement item does not need to be reported. |
| List of Labels | | 1 to a maximum number of label information | | |
| > label information | M | | Measurement label | Measurement label |
| Granularity | M | | Granularity | collection |
| Period | | | Period | granularity of measurement |
| Cell Global ID | O | | Cell Global ID | point to a specific cell used to generate a measurement information list through measurement subscription |

The way for indicating the measurement information in the action definition by means of measurement information mapping is described hereinafter with a specific example, as shown in Table 8.

**Table 8: Action definition**

| IE/Group name | Presence | Range | semantic description | example |
|---|---|---|---|---|
| UE ID | M | | point to a specific UE of interest | Note: this is the UE ID structure defined by O-RAN |
| measurement information mapping | M | Integer (0...), 64bits | Bit0: OTDOA | 0x1f |
| | | | Bit1: AOA | |
| | | | Bit2: AOD | |
| | | | Bit3: TOA | |
| | | | Bit4: UTDOA | |
| List of Labels | | 1.. <maxnoofLabelInfo> | | |
| > label information | M | | | True (No Label=True) |
| Granularity Period | M | | collection granularity of measurement | 0x2 (2ms) |

As shown in above Table 8, in the measurement information mapping, Bit0 is used to indicate OTDOA; Bit1 is used to indicate AOA; Bit2 is used to indicate AoD; Bit3 is used to indicate TOA; Bit4 is used to indicate UTDOA.

Optionally, in the embodiment of the present application, the RIC indication message is defined, and the RIC indication message includes the location measurement information that the network node needs to report. For example, the E2 node reports the location measurement information through the RIC indication message. The RIC indication message is sent by the network node to the first interface, and forwarded to the location function entity by the first interface. The definition of the RIC indication message will be described below.

As an optional embodiment, the RIC indication message includes at least one of the following:
(1) Measurement data;
optionally, the measurement data includes at least one of the following:
   a) Measurement Record; where the measurement record includes choice measured value, and the choice measured value includes one of the following:
      integer value;
      real value;
      no value;
   b) Incomplete indication (Incomplete Flag).

(2) Measurement information mapping.
Optionally, the measurement information mapping includes N bits of information, and each bit of information is used to indicate a piece of measurement information; where N is an integer greater than or equal to 1.
(3) Matching Condition List.
Optionally, the matching condition list includes a list of labels, and the list of labels includes label information.
(4) Granularity Period.
In this embodiment, the measurement information mapping mode can be used in the RIC subscription request message, so the measurement information mapping can also be used in the RIC indication message. That is, in the embodiment of the present application, in the RIC indication message, the measurement information reported by network node is indicated through measurement information mapping mode. The measurement information mapping may include a plurality of bit information, and each bit information corresponds to an item of measurement information. The RIC indication message is shown in Table 9.

**Table 9: RIC indication message**

| IE/Group name | Presence | Range | IE type and reference | semantic description |
|---|---|---|---|---|
| measurement data | | 1 to a maximum number of measurement records | | include a set of measurement records, each of which is collected at each granularity Period |
| > Measurement Record | | 1 to a maximum number of measurement values | | Include measurement values in the same order as in measurement information list (if any), otherwise in t order defined in a subscription |
| >> choice measured Value | | | | |
| >>> Integer Value | M | | Integer (0..4294967295) | |
| >>> Real Value | M | | REAL | |
| >>>No Value | M | | NULL | |
| > Incomplete Flag | O | | ENUMERATED (true, ...) | indicate that measurement record is unreliable. |
| measurement information mapping | M | | 64bits, each bit represents a measurement item; for example, "1" indicates that a measurement item needs to be reported, and "0" indicates that a measurement item does not need to be reported. | |
| Matching Condition List | | 1 to the maximum number of measurement information | | |
| > List of Labels | | 1 to a maximum number of label information | | |
| >> label information | M | | Measurement label | |
| Granularity Period | O | | Granularity Period | collection granularity of measurement |

In this embodiment, the RIC indication message is defined, and the RIC indication message includes a measurement information mapping and a matching condition list, which replaces the measurement quantity name represented by a string in the related art, thereby improving transmission efficiency. The following describes a manner for indicating measurement information through measurement information mapping in the RIC indication message in an embodiment of the present application, as shown in Table 10, which is E2SM-KPM indication information format 1 of an embodiment of the present application.

**Table 10: E2SM-KPM indication message format 1**

| | | | | | |
|---|---|---|---|---|---|
| IE/Group name | Presenc e | Range | IE type and reference | semantic description | example |
| >> choice measured Value | | | | | N/A |
| >>> Integer Value | M | | INTEGER (0..429496729 5) | | 0x1111 |
| | | | | | 0x2222 |
| | | | | | 0x3333 |
| | | | | | 0x4444 |
| | | | | | 0x5555 |
| measureme nt information mapping | M | | 64bits, each bit represents a measurement item; for example, "1" indicates that a measurement item needs to be reported, and "0" indicates that a measurement item does not need to be reported. | Bit0:OTDO A | 0x1f |
| | | | | Bit1:AOA | |
| | | | | Bit2:AoD | |
| | | | | Bit3:TOA | |
| | | | | Bit4:UTDO A | |
| Matching Condition List | | 1 to the maximum number of measureme nt information | | | N/A |
| > List of Labels | | 1 to a maximum | | | N/A |
| | | number of label information | | | |
| >> label information | M | | Measurement label | | True(No label=True ) |
| Granularity Period | O | | Granularity Period | collection granularity of measuremen t | 0x2(2ms) |

As shown in Table 10, in the RIC indication message, a measurement information mapping is set, so that the measurement quantity represented by a character string in the related art is replaced by the measurement information mapping. The measurement information mapping may include a plurality of bits of information, and each bit of information indicates different measurement information, for example, indicating OTDOA through Bit0; indicating AOA through Bit1; indicating AoD through Bit2; indicating TOA through Bit3; indicating UTDOA through Bit4.

As an optional embodiment, the present application also defines a location response message, which is sent by the location function entity to the first application program. Optionally, the location response message includes at least one of the following :
(1) Message Type;
(2) Information (Request xApp Info) of the first application program corresponding to the location request message;
   Optionally, the information of the first application program may include: a first application program identifier (xApp ID) and/or a location request message identifier (Request ID).
(3) List of responded UE Locations; where the responded UE Locations may include a UE ID.
(4) Location Information.
   Optionally, the location information includes at least one of the following:
   Latitude information;
   Longitude information;
   Altitude information.

The location response message is shown in Table 11.

**Table 11: Location Response Message**

| IE/Group name | Presence | Range | semantic description |
|---|---|---|---|
| Message type | M | | Location response |
| xApp information | | | |
| >xApp ID | M | | |
| >Request ID | M | | |
| List of Responded UE Locations | M | 1 to the maximum number of UE measurement reports | |
| >UE ID | M | | |
| Location information | | | |
| >> latitude | M | | positive integers represent north latitude, negative integers represent south latitude |
| >> longitude | M | | Positive integers represent east longitude, negative integers represent west longitude |
| >> altitude | M | | in unit of centimeters |

In this embodiment, the location response message sent by the location function entity when feeding back location information to the first application is defined. The following takes the first application requesting the location information of two UEs as an example to illustrate the specific content of the location response message, as shown in Table 12.

**Table 12: Location Response Message**

| IE/Group name | Presence | semantic description | example |
|---|---|---|---|
| Message type | M | Location response | |
| xApp information | | | |
| >xApp ID | M | 7 | |
| > Location request message ID | M | 1 | |
| List of responded UE locations | M | | |
| >UE ID | M | | 0x12345678 |
| Location information | | | |
| >> latitude | M | | 39 |
| >> longitude | M | | 116 |
| >> altitude | M | | 2000 |
| >UE ID | M | | 0x87654321 |
| Location information | | | |
| >> latitude | M | | 40 |
| >> longitude | M | | 117 |
| >> altitude | M | | 5000 |

In the embodiment of the present application, a location function entity is added to the Near-RT RIC architecture, and the message process and message body related to the location function are defined to meet the location requirements of different applications on the Near-RT RIC, thereby making up for the lack of location requirements in the existing architecture.

As shown in FIG. 5, one embodiment of the present application further provides a location method, which is applied to a network node. The network node may be an E2 node, and the method includes:

Step 501: sending, by the network node, location measurement information related to a target UE to a location function entity of a Near-RT RIC.

In this embodiment, the Near-RT RIC includes a location function (LF) entity. The target UE is a UE for which location information needs to be determined. The target UE may refer to one UE, or may include multiple UEs. The Near-RT RIC may carry one or more application programs, and a first application program which needs to obtain the location information of the target UE sends a location request message to the location function entity. The location function entity obtains location measurement information for the target UE from the network node. The network node may be an E2 node. The location function entity performs location estimation on the target UE according to the location measurement information, and determines the location information of the target UE.

The location function entity may further obtain location assistance information from a second interface, such as the target UE's historical trajectory, speed, map. The location function entity may perform location estimation according to the location measurement information and the location assistance information, and determines the location information of the target UE.

In one embodiment of the present application, the network node provides the location measurement information of the target UE to the location function entity of the Near-RT RIC, so that the target function entity obtains the location information of the target UE according to the location measurement information, thereby realizing the location function of the Near-RT RIC and meeting the location requirements.

Optionally, the method further includes: receiving a RIC subscription request message sent by the location function entity through a first interface;
and the sending location measurement information related to a target UE to a location function entity of a Near-RT RIC, includes:
sending the location measurement information to the location function entity through the first interface according to the RIC subscription request message.

Optionally, the sending the location measurement information to the location function entity through the first interface, includes: sending a RIC indication message to the location function entity through the first interface, where the RIC indication message includes the location measurement information.

In this embodiment, the location function entity may obtain the location measurement information from the network node through the first interface, and the first interface may be an E2 termination. The location function entity may generate a RIC subscription request message according to the location request message of the first application program, and send the RIC subscription request message to the first interface. The first interface sends the RIC subscription request message to the network node. The network node determines the measurement information that needs to be fed back according to the RIC subscription request message, and feeds back the location measurement information to the location function entity through the first interface.

Specifically, the network node may send a RIC indication message to the first interface, where the RIC indication message includes the location measurement information; and the first interface forwards the RIC indication message to the location function entity.

In this embodiment, the RIC subscription request message may include information content requested to be reported by the network node, such as OTDOA, AoD, TOA, UTDOA, etc. The network node determines the measurement information that needs to be reported, according to the RIC subscription request message, and feeds back the measurement information to the first interface through the RIC indication message. The first interface forwards the measurement information to the location function entity.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

As an optional embodiment, the present application defines the RIC subscription request message. The RIC subscription request message is sent to the first interface (such as the E2 termination) by the location function entity, and the RIC subscription request message is sent to a network node (such as an E2 node) through the first interface. The RIC subscription request message can be implemented by partially multiplexing formats defined by the Near-RT RIC E2 Interface Application Protocol (E2AP) and E2 Interface Service Mode (E2SM)-Key Performance Monitor (KPM) technical specifications.

Optionally, the RIC subscription request message includes at least one of the following:
(1) Message Type;
(2) Subscription request message identifier (RIC Request ID);
(3) RAN function ID;
(4) Subscription related information.

Optionally, the subscription related information includes: RIC event trigger definition) and/or sequence of actions.

Optionally, the sequence of actions includes at least one of the following:
RIC action ID;
RIC action type;
RIC action definition;
RIC subsequent action.

In the embodiment of the present application, the action definition is defined, and the measurement quantity name represented by the existing character string is replaced by measurement information mapping, thereby improving transmission efficiency. Optionally, the action definition includes at least one of the following:
UE ID;
Measurement information mapping;
list of labels;
granularity period;
cell global ID.

Optionally, the measurement information mapping includes N bits of information, and each bit of information is used to indicate a piece of measurement information; where N is an integer greater than or equal to 1.

In this embodiment, in the action definition, the original measurement information table represented by a character string is replaced by a measurement information mapping. The measurement information mapping refers to indicating measurement information through bit information. The measurement information mapping may include a plurality of bit information, each bit of information corresponds to indicate a measurement quantity and may indicate whether to report the measurement quantity.

Optionally, the method further includes: determining measurement information that needs to be reported according to the measurement information mapping. The network node determines the requested measurement information according to the measurement information mapping in the RIC subscription request message, and then determines the measurement information that needs to be reported.

As an optional embodiment, the RIC indication message is defined, and the RIC indication message includes the location measurement information that the network node needs to report. For example, the E2 node reports the location measurement information through the RIC indication message. The RIC indication message is sent by the network node to the first interface, and forwarded to the location function entity by the first interface.

Optionally, the RIC indication message includes at least one of the following:
(1) Measurement data;
   optionally, the measurement data includes at least one of the following:
   a) Measurement Record; where the measurement record includes choice measured value, and the choice measured value includes one of the following:
      integer value;
      real value;
      no value;
   b) Incomplete indication.
(2) Measurement information mapping.
   Optionally, the measurement information mapping includes N bits of information, and each bit of information is used to indicate a piece of measurement information; where N is an integer greater than or equal to 1.
(3) Matching Condition List.
   Optionally, the matching condition list includes a list of labels, and the list of labels includes label information.
(4) Granularity Period.
   In this embodiment, the measurement information mapping mode can be used in the RIC subscription request message, so the measurement information mapping can also be used in the RIC indication message. That is, in the embodiment of the present application, in the RIC indication message, the measurement information reported by network node is indicated through measurement information mapping mode. The measurement information mapping may include a plurality of bit information, and each bit of information corresponds to an item of measurement information. By defining the measurement information mapping in the RIC indication message, which replaces the measurement quantity name represented by a string in the related art, the transmission efficiency is improved,

In the embodiment of the present application, the network node sends location measurement information to the location function entity through the first interface, so that the location function entity performs location estimation on the target UE according to the location measurement information and obtains the location information of the target UE and sends the location information to the first application program, thereby realizing the location function of the Near-RT RIC and meeting the location requirements.

It is to be noted here that the embodiment of the present application applied to the network node can implement all the steps performed by the network node in the above embodiment applied to the location function entity, and can achieve the same technical effect, which will not be repeated here.

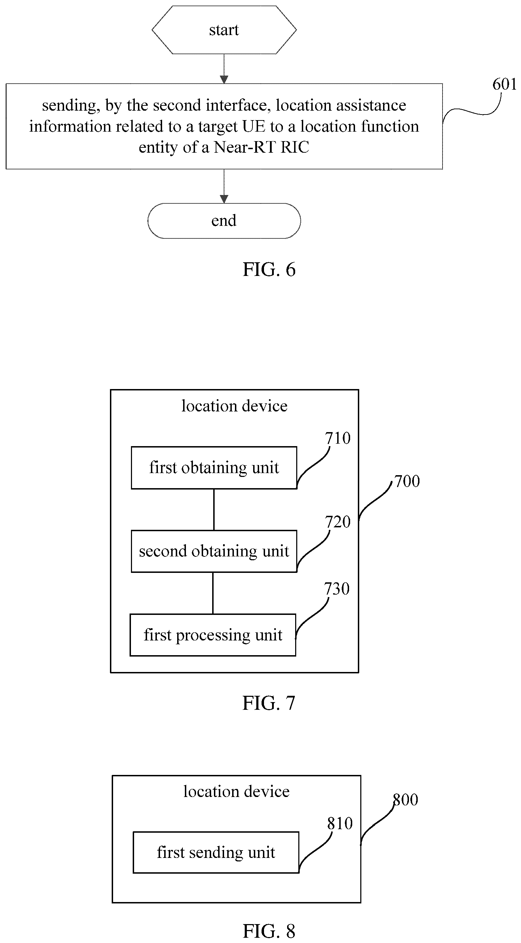

As shown in FIG. 6, one embodiment of the present application further provides a location method, which is applied to a second interface. The second interface may be an A1 termination, and the method includes:
Step 601: sending, by the second interface, location assistance information related to a target UE to a location function entity of a Near-RT RIC.

In this embodiment, the Near-RT RIC includes the location function entity. The target UE is a UE for which location information needs to be determined. The target UE may refer to one UE, or may include multiple UEs. The Near-RT RIC may carry one or more application programs. The location function entity can obtain a location request message for the target UE, sent by a first application program.

The location function entity may obtain location assistance information from the second interface according to the location request message, and perform location estimation on the target UE according to the location assistance information and location measurement information obtained from the network node and then determines the location information of the target UE.

Optionally, the method further includes: receiving an assistance information request message sent by the location function entity; according to the assistance information request message, sending an assistance information response message to the location function entity, where the assistance information response message includes the location assistance information.

In this embodiment, when the location function entity requests the location assistance information from the second interface, the location function entity may send an assistance information request message to the second interface according to the location request message. The second interface determines assistance information to be reported according to the assistance information request message, and sends an assistance information response message to the location function entity. The assistance information response message includes the location assistance information. The location assistance information includes, for example, the target UE's historical trajectory, speed, map.

In this embodiment of the present application, the second interface sends the location assistance information to the location function entity, so that the location function entity performs location estimation on the target UE according to the location assistance information and location measurement information, and obtains the location information of the target UE. The location function entity can send the location information to the first application program, thereby realizing the location function of the Near-RT RIC and meeting the location requirements.

It is to be noted here that the embodiment of the present application applied to the second interface can implement all the steps performed by the second interface in the above embodiment applied to the location function entity, and can achieve the same technical effect, which will not be repeated here.

As an optional embodiment, the present application further provides a location method applied to a first application program. The method includes:
sending, by the first application program, a location request message for a target user equipment (UE) to a location function entity of a near real time RAN intelligent Controller (Near-RT RIC);
receiving location information of the target UE sent by the location function entity according to the location request message.

In this embodiment, the first application program is an application program carried on the Near-RT RIC. The first application program sends the location request message to the location function entity when the first application program needs to obtain the location information of the target UE. The first application program may refer to one application program, or may refer to multiple application programs.

The location function entity receives the location request message from the first application program, and obtains relevant location measurement information and other location assistance information of the target UE according to the location request message, and then performs location estimation on the target UE. After obtaining the location information, the location function entity feeds back the location information to the first application program.

Optionally, the receiving location information of the target UE sent by the location function entity according to the location request message, may include: receiving a location response message sent by the location function entity, where the location response message includes the location information.

Specifically, the location request message includes at least one of the following information:
(1) Message Type;
(2) Information of the first application program corresponding to the location request message; where the information of the first application program may include at least one of the following:
   a first application identifier;
   location request message identifier;
(3) choice event trigger definition; where the choice event trigger definition may include at least one of the following items:
   periodic report;
   event trigger report;
(4) list of UEs requesting location.
(5) granularity period.

In the embodiment of the present application, the first application program carried on the Near-RT RIC obtains the location information for the target UE by sending a location request message to the location function entity, thereby realizing the location function of the Near-RT RIC and meeting the location requirements.

It is to be noted here that all the embodiments related to the first application program in the above embodiments applied to the location function entity are applicable to this embodiment applied to the first application program, and can achieve the same technical effect, which will not be repeated here.

The above embodiment introduces the location method of the present disclosure, and the following embodiment will further describe corresponding device in conjunction with the accompanying drawings.

Specifically, as shown in FIG. 7, one embodiment of the present disclosure provides a location device 700, which is applied to a location function entity of a near real time RAN intelligent Controller (Near-RT RIC), including:
a first obtaining unit 710 configured to obtain a location request message for a target UE;
a second obtaining unit 720 configured to obtain location measurement information related to the target UE according to the location request message;
a first processing unit 730 configured to estimate a location of the target UE to obtain location information according to the location measurement information.

Optionally, the first obtaining unit is specifically configured to: receive the location request message sent by the first application program.

The first application program is carried on the Near-RT RIC.

Optionally, the device further includes:
a third sending unit configured to send the location information to the first application program.

Optionally, the second obtaining unit includes:
a first obtaining subunit configured to obtain the location measurement information from a network node through a first interface according to the location request message.

Optionally, the first obtaining subunit is specifically configured to:
generate a RIC subscription request message according to the location request message;
send the RIC subscription request message to the network node through the first interface;
receive the location measurement information sent by the network node through the first interface.

Optionally, when generating the RIC subscription request message according to the location request message, the first obtaining subunit is specifically configured to:
when there are at least two location request messages and the at least two location request messages are from different application programs, combine the at least two location request messages to generate the RIC subscription request message.

Optionally, when receiving the location measurement information sent by the network node through the first interface, the first obtaining subunit is specifically configured to:
receive an RIC indication message sent by the network node through the first interface, where the RIC indication message includes the location measurement information.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

Optionally, the second obtaining unit includes:
a second obtaining subunit is configured to obtain location assistance information related to the target UE through a second interface according to the location request message;
the first processing unit is specifically configured to: perform location estimation on the target UE according to the location measurement information and the location assistance information to obtain location information.

Optionally, the second obtaining subunit is specifically configured to:
send an assistance information request message to the second interface according to the location request message;
receive an assistance information response message sent by the second interface, wherein the assistance information response message includes the location assistance information.

Optionally, the third sending unit is specifically configured to: send a location response message to the first application program, where the location response message includes the location information.

Optionally, the location request message includes at least one of the following information:
message type;
information of a first application program corresponding to the location request message;
choice event trigger definition;
list of UEs requesting location.
granularity period.

Optionally, the information of the first application program includes at least one of the following:
a first application identifier;
location request message identifier.

Optionally, the choice event trigger definition includes at least one of the following:
periodic report;
event trigger report.

Optionally, the RIC subscription request message includes at least one of the following;
message type;
subscription request message identifier;
RAN function ID;
subscription related information.

Optionally, the subscription related information includes: event trigger definition and/or sequence of actions.

Optionally, the sequence of actions includes at least one of the following:
RIC action ID;
RIC action type;
RIC action definition;
RIC subsequent action.

Optionally, the action definition includes at least one of the following:
UE ID;
Measurement information mapping;
list of labels;
granularity period;
cell global ID.

Optionally, the RIC indication message includes at least one of the following:
Measurement data;
Measurement information mapping;
Matching Condition List;
Granularity Period.
Optionally, the measurement data includes at least one of the following:
measurement records;
incomplete indication.

Optionally, the measurement record includes choice measured value, and the choice measured value includes one of the following:
integer value;
real value;
no value.

Optionally, the measurement information mapping includes N bits of information, and each bit of information is used to indicate a piece of measurement information; where N is an integer greater than or equal to 1.

Optionally, the location response message includes at least one of the following:
message Type;
information of the first application program corresponding to the location request message;
list of responded UE Locations;
location Information.

Optionally, the location information includes at least one of the following:
latitude information;
longitude information;
altitude information.

In the embodiment of the present application, the location function entity is set in the Near-RT RIC, and the location function entity obtains the location measurement information related to the target UE according to the location request message, thereby performing location estimation on the target UE and obtaining the location information of the target UE, thereby realizing the location function of the Near-RT RIC and meeting the location requirements.

It is to be noted here that the above device provided by the embodiment of the present disclosure can implement all the method steps implemented by the above embodiment of the method applied to the location function entity, and can achieve the same technical effect. The same parts and beneficial effects as those in the method embodiment will not be described here.

As shown in FIG. 8, one embodiment of the present disclosure provides a location device 800, which is applied to a network node and includes:
a first sending unit 810 configured to send location measurement information related to a target UE to a location function entity of a near real time RAN intelligent Controller (Near-RT RIC).

Optionally, the device further includes:
a first receiving unit configured to receive a RIC subscription request message sent by the location function entity through a first interface;
the first sending unit is specifically configured to send the location measurement information to the location function entity through the first interface according to the RIC subscription request message.

Optionally, when sending the location measurement information to the location function entity through the first interface, the first sending unit is specifically configured to:
send a RIC indication message to the location function entity through the first interface, wherein the RIC indication message includes the location measurement information.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

Optionally, the RIC subscription request message includes at least one of the following;
message type;
subscription request message identifier;
RAN function ID;
subscription related information.

Optionally, the subscription related information includes: event trigger definition and/or sequence of actions.

Optionally, the sequence of actions includes at least one of the following:
action ID;
action type;
action definition;
subsequent action.

Optionally, the action definition includes at least one of the following:
UE ID;
measurement information mapping;
list of labels;
granularity period;
cell global ID.

Optionally, the device further includes:
a first determining unit configured to determine measurement information that needs to be reported according to the measurement information mapping.

Optionally, the RIC indication message includes at least one of the following:
measurement data;
measurement information mapping;
matching condition list;
granularity period.

Optionally, the measurement data includes at least one of the following:
measurement records;
incomplete indication.

Optionally, the measurement record includes choice measured value, and the choice measured value includes one of the following:
integer value;
real value;
no value.

Optionally, the measurement information mapping includes N bits of information, and each bit of information is used to indicate a piece of measurement information; where N is an integer greater than or equal to 1.

In this embodiment of the present application, the network node provides the location measurement information of the target UE to the location function entity of the Near-RT RIC, so that the target function entity obtains the location information of the target UE according to the location measurement information, thereby realizing the location function of the Near-RT RIC and meeting the location requirements.

It is to be noted here that the above device provided by the embodiment of the present disclosure can implement all the method steps implemented by the above embodiment of the method applied to the network node, and can achieve the same technical effect. The same parts and beneficial effects as those of the method embodiment will not be described here.

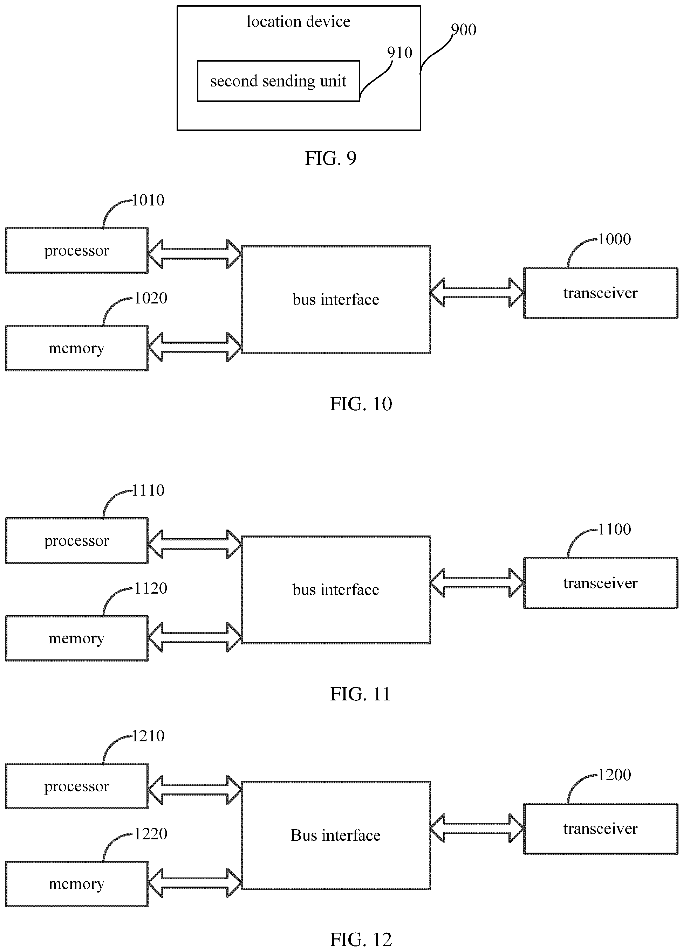

As shown in FIG. 9, one embodiment of the present disclosure provides a location device 900, which is applied to a second interface, including:

a second sending unit 910 configured to send the location assistance information related to a target UE to a location function entity of a near real time RAN intelligent Controller (Near-RT RIC)

Optionally, the device further includes:
a second receiving unit configured to receive an assistance information request message sent by the location function entity;
a fourth sending unit configured to send an assistance information response message to the location function entity according to the assistance information request message, where the assistance information response message includes the location assistance information.

In this embodiment of the present application, the second interface sends the location assistance information to the location function entity, so that the location function entity performs location estimation on the target UE according to the location assistance information and location measurement information obtained from the network node, and obtains the location information of the target UE. The location function entity can send the location information to the first application program, thereby realizing the location function of the Near-RT RIC and meeting the location requirements.

It is to be noted here that above device provided by the embodiment of the present disclosure can implement all the method steps implemented by the above method embodiment applied to the second interface, and can achieve the same technical effect. The same parts and beneficial effects as those in the method embodiment will not be described here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 10, one embodiment of the present disclosure further provides a location device, which is applied to a location function entity of a near real time RAN intelligent Controller (Near-RT RIC), including: a memory 1020, a transceiver 1000 and a processor 1010. The memory 1020 is used to store computer programs; the transceiver 1000 is used to send and receive data under control of the processor 1010 and perform the following operations:
obtaining a location request message for a target UE.

The processor 1010 is configured to read the computer program in the memory and perform the following operations:
obtaining location measurement information related to the target UE according to the location request message;
estimating a location of the target UE to obtain location information according to the location measurement information.

Optionally, when obtaining a location request message for the target UE, the transceiver is specifically configured to:
receive the location request message sent by the first application program.

The first application program is carried on the Near-RT RIC.

Optionally, the transceiver is further configured to,
send the location information to the first application program.

Optionally, the processor is configured to read the computer program in the memory and perform the following operations:
obtaining the location measurement information from a network node through a first interface according to the location request message.

Optionally, the processor is configured to read the computer program in the memory and perform the following operations:
generating a RIC subscription request message according to the location request message.

The transceiver is further configured to:
send the RIC subscription request message to the network node through the first interface;
receive the location measurement information sent by the network node through the first interface.

Optionally, the processor is configured to read the computer program in the memory and perform the following operations:
when there are at least two location request messages and the at least two location request messages are from different application programs, combining the at least two location request messages to generate the RIC subscription request message.

The transceiver is configured to receive an RIC indication message sent by the network node through the first interface, where the RIC indication message includes the location measurement information.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

Optionally, the processor is configured to read the computer program in the memory and perform the following operations:
obtaining location assistance information related to the target UE through a second interface according to the location request message;
performing location estimation on the target UE according to the location measurement information and the location assistance information to obtain location information.

Optionally, the transceiver is specifically configured to:
send an assistance information request message to the second interface according to the location request message;
receive an assistance information response message sent by the second interface, wherein the assistance information response message includes the location assistance information.

Optionally, the transceiver is specifically configured to send a location response message to the first application program, where the location response message includes the location information.

Optionally, the location request message includes at least one of the following information:
message type;
information of a first application program corresponding to the location request message;
choice event trigger definition;
list of UEs requesting location.
granularity period.

Optionally, the information of the first application program includes at least one of the following:
a first application identifier;
location request message identifier.

Optionally, the choice event trigger definition includes at least one of the following:
periodic report;
event trigger report.

Optionally, the RIC subscription request message includes at least one of the following;
message type;
subscription request message identifier;
RAN function ID;
subscription related information.

Optionally, the subscription related information includes: event trigger definition and/or sequence of actions.

Optionally, the sequence of actions includes at least one of the following:
RIC action ID;
RIC action type;
RIC action definition;
RIC subsequent action.

Optionally, the action definition includes at least one of the following:
UE ID;
Measurement information mapping;
list of labels;
granularity period;
cell global ID.

Optionally, the RIC indication message includes at least one of the following:
Measurement data;
Measurement information mapping;
Matching Condition List;
Granularity Period.

Optionally, the measurement data includes at least one of the following:
measurement records;
incomplete indication.

Optionally, the measurement record includes choice measured value, and the choice measured value includes one of the following:
integer value;
real value;
no value.

Optionally, the measurement information mapping includes N bits of information, and each bit of information is used to indicate a piece of measurement information; where N is an integer greater than or equal to 1.

Optionally, the location response message includes at least one of the following:
message Type;
information of the first application program corresponding to the location request message;
list of responded UE Locations;
location Information.

Optionally, the location information includes at least one of the following:
latitude information;
longitude information;
altitude information.

In the embodiment of the present application, the location function entity is set in the Near-RT RIC, and the location function entity obtains the location measurement information related to the target UE according to the location request message, thereby performing location estimation on the target UE and obtaining the location information of the target UE, thereby realizing the location function of the Near-RT RIC and meeting the location requirements.

In FIG. 10, a bus architecture may include any number of interconnected bus and bridge. Specifically, various circuits of one or more processors, which are represented by the processor 1010, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1000 may be multiple elements, including a transmitter and a receiver and provide units, which communicate with other devices on the transmission medium. The processor 1010 is responsible for managing the bus architecture and the normal processing. The memory 1020 may be used to store data used by the processor 1010 for performing operations.

The processor 1010 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided by the embodiment of the present disclosure can implement all the method steps implemented by the above embodiment of the method applied to the location function entity, and can achieve the same technical effect. The same parts and beneficial effects as those in the method embodiment will not be described here.

As shown in FIG. 11, one embodiment of the present disclosure further provides a location device, which is applied to a network node, and the network node may be an E2 node, including: a memory 1120, a transceiver 1100, and a processor 1110. The memory 1120 is used to store computer programs; the processor 1110 is used to read the computer program in the memory; the transceiver 1100 is used to send and receive data under control of the processor 1110 and perform the following operations:
sending location measurement information related to a target UE to a location function entity of a near real time RAN intelligent Controller (Near-RT RIC).

Optionally, the transceiver is further configured to:
receive a RIC subscription request message sent by the location function entity through a first interface;
send the location measurement information to the location function entity through the first interface according to the RIC subscription request message.

Optionally, the transceiver is further configured to:
send a RIC indication message to the location function entity through the first interface, wherein the RIC indication message includes the location measurement information.

Optionally, the location measurement information includes at least one of the following:
observed time difference of arrival (OTDOA);
angle of arrival (AOA);
angle of departure (AOD);
time of arrival (TOA);
uplink time difference of arrival (UTDOA).

Optionally, the RIC subscription request message includes at least one of the following;
message type;
subscription request message identifier;
RAN function ID;
subscription related information.

Optionally, the subscription related information includes: event trigger definition and/or sequence of actions.

Optionally, the sequence of actions includes at least one of the following:
action ID;
action type;
action definition;
subsequent action.

Optionally, the action definition includes at least one of the following:
UE ID;
measurement information mapping;
list of labels;
granularity period;
cell global ID.

Optionally, the processor is configured to read the computer program in the memory and perform the following operations:
determining measurement information that needs to be reported according to the measurement information mapping.

Optionally, the RIC indication message includes at least one of the following:
measurement data;
measurement information mapping;
matching condition list;
granularity period.

Optionally, the measurement data includes at least one of the following:
measurement records;
incomplete indication.

Optionally, the measurement record includes choice measured value, and the choice measured value includes one of the following:
integer value;
real value;
no value.

Optionally, the measurement information mapping includes N bits of information, and each bit of information is used to indicate a piece of measurement information; where N is an integer greater than or equal to 1.

In this embodiment of the present application, the network node provides the location measurement information of the target UE to the location function entity of the Near-RT RIC, so that the target function entity obtains the location information of the target UE according to the location measurement information, thereby realizing the location function of the Near-RT RIC and meeting the location requirements.

In FIG. 11, a bus architecture may include any number of interconnected bus and bridge. Specifically, various circuits of one or more processors, which are represented by the processor 1110, and one or more memories, which are represented by the memory 1120, are linked together. The bus architecture may link various other circuits, such as a peripheral device, voltage regulator and a power management circuit together. These features are well known in this field; therefore, this disclosure does not make further description on these features. The bus interface provides an interface. The transceiver 1100 may be multiple elements, including a transmitter and a receiver and provide units, which communicate with other devices on the transmission medium. The processor 1110 is responsible for managing the bus architecture and the normal processing. The memory 1120 may be used to store data used by the processor 1110 for performing operations.

The processor 1110 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided by the embodiment of the present disclosure can implement all the method steps implemented by the above embodiment of the method applied to the network node, and can achieve the same technical effect. The same parts and beneficial effects as those in the method embodiment will not be described here.

As shown in FIG. 12, one embodiment of the present disclosure further provides a network integration control device, which is applied to a second interface, and the second interface may be an A1 termination. The network integration control device includes a memory 1220, a transceiver 1200, and a processor 1210. The memory 1220 is used to store a computer program. The processor 1210 is used to read the computer program in the memory. The transceiver 1200 is used to send and receive data under control of the processor 1210 and perform the following operations:
sending location assistance information related to a target UE to a location function entity of a Near-RT RIC.

Optionally, the transceiver is further configured to:
receive an assistance information request message sent by the location function entity;
according to the assistance information request message, send an assistance information response message to the location function entity, where the assistance information response message includes the location assistance information.

In this embodiment of the present application, the second interface sends the location assistance information to the location function entity, so that the location function entity performs location estimation on the target UE according to the location assistance information and location measurement information obtained from a network node, and obtains the location information of the target UE. The location function entity can send the location information to a first application program, thereby realizing the location function of the Near-RT RIC and meeting the location requirements.

In FIG. 12, a bus architecture may include any number of interconnected bus and bridge. Specifically, various circuits of one or more processors, which are represented by the processor 1210, and one or more memories, which are represented by the memory 1220, are linked together. The bus architecture may link various other circuits, such as a peripheral device, voltage regulator and a power management circuit together. These features are well known in this field; therefore, this disclosure does not make further description on these features. The bus interface provides an interface. The transceiver 1200 may be multiple elements, including a transmitter and a receiver and provide units, which communicate with other devices on the transmission medium. The processor 1210 is responsible for managing the bus architecture and the normal processing. The memory 1220 may be used to store data used by the processor 1210 for performing operations.

The processor 1210 may be a central processing unit (CPU), an application specific integrated circuit (ASIC), a field-programmable gate array (FPGA) or a complex programmable logic device (CPLD). The processor 1220 may also adopt multi-core architecture.

It is to be noted here that the above device provided by the embodiment of the present disclosure can implement all the method steps implemented by the above embodiment of the method applied to the second interface, and can achieve the same technical effect. The same parts and beneficial effects as those in the method embodiment will not be described here.

In addition, one embodiment of the present disclosure further provides a processor-readable storage medium, which includes a computer program stored thereon. When the program is executed by a processor, the steps of the location method are implemented, with the same technical effect achieved, which will not be repeated here to avoid repetition. The readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A location method, comprising:
obtaining, by a location function entity of a near real time RAN intelligent Controller (Near-RT RIC), a location request message for a target user equipment (UE);
obtaining, by the location function entity, location measurement information related to the target UE according to the location request message;
estimating, by the location function entity, a location of the target UE to obtain location information according to the location measurement information.

2. The method according to claim 1, wherein the obtaining a location request message for a target user equipment (UE), incudes: receiving the location request message sent by a first application program; wherein the first application program is carried on the Near-RT RIC.

3. The method according to claim 2, wherein the method further includes:
sending the location information to the first application program.

4. The method according to claim 1, wherein the obtaining location measurement information related to the target UE according to the location request message, includes:
obtaining the location measurement information from a network node through a first interface according to the location request message information.

5. The method according to claim 4, wherein the obtaining the location measurement information from a network node through a first interface according to the location request message information, includes:
generating a RIC subscription request message according to the location request message;
sending the RIC subscription request message to the network node through the first interface;
receiving the location measurement information sent by the network node through the first interface.

6. The method according to claim 5, wherein the generating a RIC subscription request message according to the location request message, includes:
when there are at least two location request messages and the at least two location request messages are from different application programs, combining the at least two location request messages to generate the RIC subscription request message.

7. The method according to claim 5, wherein the receiving the location measurement information sent by the network node through the first interface, includes:
receiving an RIC indication message sent by the network node through the first interface, wherein the RIC indication message including the location measurement information.

8. The method according to claim 1, wherein the location measurement information includes at least one of the following:
observed time difference of arrival (OTDOA);
angle of arrival (AOA);
angle of departure (AOD);
time of arrival (TOA);
uplink time difference of arrival (UTDOA).

9. The method according to claim 1, wherein the method further includes:
obtaining location assistance information related to the target UE through a second interface according to the location request message;
the estimating a location of the target UE to obtain location information according to the location measurement information, includes:
performing location estimation on the target UE according to the location measurement information and the location assistance information to obtain location information.

10. The method according to claim 9, wherein the obtaining location assistance information related to the target UE through a second interface according to the location request message, includes:
sending an assistance information request message to the second interface according to the location request message;
receiving an assistance information response message sent by the second interface, wherein the assistance information response message includes the location assistance information.

11. The method according to claim 3, wherein the sending the location information to the first application program, includes:
sending a location response message to the first application program, wherein the location response message includes the location information.

12. The method according to claim 1, wherein the location request message includes at least one of the following information:
message type;
information of a first application program corresponding to the location request message;
choice event trigger definition;
list of UEs requesting location.
granularity period.

13. The method according to claim 12, wherein the information of the first application program includes at least one of the following:
a first application identifier;
location request message identifier.

14. The method according to claim 12, wherein the choice event trigger definition includes at least one of the following:
periodic report;
event trigger report.

15. The method according to claim 5, wherein the RIC subscription request message includes at least one of the following:
message type;
subscription request message identifier;
RAN function ID;
subscription related information.

16. The method according to claim 15, wherein the subscription related information includes: event trigger definition and/or sequence of actions.

17. The method according to claim 16, wherein the sequence of actions includes at least one of the following:
action ID;
action type;
action definition;
subsequent action.

18. The method according to claim 17, wherein the action definition includes at least one of the following:
UE ID;
measurement information mapping;
list of labels;
granularity period;
cell global ID.

19. The method according to claim 7, wherein the RIC indication message includes at least one of the following:
measurement data;
measurement information mapping;
matching condition list;
granularity period.

20. The method according to claim 19, wherein the measurement data includes at least one of the following:
measurement record;
incomplete indication.

21. The method according to claim 20, wherein the measurement record includes choice measured value, and the choice measured value includes one of the following:
integer value;
real value;
no value.

22. The method according to claim 18 or 19, wherein the measurement information mapping includes N bits of information, and each bit of information is used to indicate a piece of measurement information;
wherein N is an integer greater than or equal to 1.

23. The method according to claim 11, wherein the location response message includes at least one of the following:
message type;
information of a first application program corresponding to the location request message;
list of responded UE Locations;
location Information.

24. The method according to claim 1 or 23, wherein the location information includes at least one of the following:
latitude information;
longitude information;
altitude information.

25. A location method, comprising:
sending, by a network node, location measurement information related to a target UE to a location function entity of a Near-RT RIC.

26. The method according to claim 25, wherein the method further includes:
receiving a RIC subscription request message sent by the location function entity through a first interface;
wherein the sending location measurement information related to a target UE to a location function entity of a Near-RT RIC, includes:
sending the location measurement information to the location function entity through the first interface according to the RIC subscription request message.

27. The method according to claim 26, wherein the sending the location measurement information to the location function entity through the first interface, includes:
sending a RIC indication message to the location function entity through the first interface, wherein the RIC indication message includes the location measurement information.

28. The method according to claim 27, wherein the location measurement information includes at least one of the following:
observed time difference of arrival (OTDOA);
angle of arrival (AOA);
angle of departure (AOD);
time of arrival (TOA);
uplink time difference of arrival (UTDOA).

29. The method according to claim 26, wherein the RIC subscription request message includes at least one of the following:
message type;
subscription request message identifier;
RAN function ID;
subscription related information.

30. The method according to claim 29, wherein the subscription related information includes: event trigger definition and/or sequence of actions.

31. The method according to claim 30, wherein the sequence of actions includes at least one of the following:
action ID;
action type;
action definition;
subsequent action.

32. The method according to claim 31, wherein the action definition includes at least one of the following:
UE ID;
measurement information mapping;
list of labels;
granularity period;
cell global ID.

33. The method according to claim 32, wherein the method further includes:
determining measurement information that needs to be reported according to the measurement information mapping.

34. The method according to claim 27, wherein the RIC indication message includes at least one of the following:
measurement data;
measurement information mapping;
matching condition list;
granularity period.

35. The method according to claim 34, wherein the measurement data includes at least one of the following:
measurement record;
incomplete indication.

36. The method according to claim 35, wherein the measurement record includes choice measured value, and the choice measured value includes one of the following:
integer value;
real value;
no value.

37. The method according to any one of claims 32 to 34, wherein the measurement information mapping includes N bits of information, and each bit of information is used to indicate a piece of measurement information;
wherein N is an integer greater than or equal to 1.

38. A location method, comprising:
sending, by a second interface, location assistance information related to a target UE to a location function entity of a Near-RT RIC.

39. The method according to claim 38, wherein the method further includes:
receiving an assistance information request message sent by the location function entity;
according to the assistance information request message, sending an assistance information response message to the location function entity, wherein the assistance information response message includes the location assistance information.

40. A location device, comprising: a memory, a transceiver, and a processor; wherein the memory is used to store computer programs; the processor is used to read the computer programs in the memory; the transceiver is used to send and receive data under control of the processor and perform the following operations:
obtaining a location request message for a target user equipment (UE);
wherein the processor is used to read the computer programs in the memory and perform the following operations:
obtaining location measurement information related to the target UE according to the location request message;
estimating a location of the target UE to obtain location information according to the location measurement information.

41. The device according to claim 40, wherein when the transceiver obtains the location request message for the target UE, the transceiver is specifically configured to perform:
receiving the location request message sent by a first application program; wherein the first application program is carried on a Near-RT RIC.

42. The device according to claim 41, wherein the transceiver is further configured to perform:
sending the location information to the first application program.

43. The device according to claim 40, wherein the processor is used to read the computer programs in the memory and perform the following operations:
obtaining the location measurement information from a network node through a first interface according to the location request message information.

44. The device according to claim 43, wherein the processor is used to read the computer programs in the memory and perform the following operations:
generating a RIC subscription request message according to the location request message;
wherein the transceiver is configured to perform: sending the RIC subscription request message to the network node through the first interface;
receiving the location measurement information sent by the network node through the first interface.

45. The device according to claim 44, wherein the processor is used to read the computer programs in the memory and perform the following operations:
when there are at least two location request messages and the at least two location request messages are from different application programs, combining the at least two location request messages to generate the RIC subscription request message.

46. The device according to claim 44, wherein the transceiver is configured to perform: receiving an RIC indication message sent by the network node through the first interface, wherein the RIC indication message including the location measurement information.

47. The device according to claim 40, wherein the processor is used to read the computer programs in the memory and perform the following operations:
obtaining location assistance information related to the target UE through a second interface according to the location request message;
performing location estimation on the target UE according to the location measurement information and the location assistance information to obtain location information.

48. The device according to claim 47, wherein the transceiver is further configured to perform:
sending an assistance information request message to the second interface according to the location request message;
receiving an assistance information response message sent by the second interface, wherein the assistance information response message includes the location assistance information.

49. The device according to claim 42, wherein the transceiver is further configured to perform:
sending a location response message to the first application program, wherein the location response message includes the location information.

50. The device according to claim 40, wherein the location request message includes at least one of the following information:
message type;
information of a first application program corresponding to the location request message;
choice event trigger definition;
list of UEs requesting location.
granularity period.

51. The device according to claim 44, wherein the RIC subscription request message includes at least one of the following:
message type;
subscription request message identifier;
RAN function ID;
subscription related information.

52. The device according to claim 46, wherein the RIC indication message includes at least one of the following:
measurement data;
measurement information mapping;
matching condition list;
granularity period.

53. The device according to claim 49, wherein the location response message includes at least one of the following:
message type;
information of a first application program corresponding to the location request message;
list of responded UE Locations;
location Information.

54. A location device, comprising: a memory, a transceiver, and a processor;
wherein the memory is used to store computer programs; the processor is used to read the computer programs in the memory; the transceiver is used to send and receive data under control of the processor and perform the following operations:
sending location measurement information related to a target UE to a location function entity of a Near-RT RIC.

55. The device according to claim 54, wherein the transceiver is further configured to perform:
receiving a RIC subscription request message sent by the location function entity through a first interface;
sending the location measurement information to the location function entity through the first interface according to the RIC subscription request message.

56. The device according to claim 55, wherein the transceiver is further configured to perform:
sending a RIC indication message to the location function entity through the first interface, wherein the RIC indication message includes the location measurement information.

57. The device according to claim 55, wherein the RIC subscription request message includes at least one of the following:
message type;
subscription request message identifier;
RAN function ID;
subscription related information.

58. The device according to claim 56, wherein the RIC indication message includes at least one of the following:
measurement data;
measurement information mapping;
matching condition list;
granularity period.

59. A location device, comprising: a memory, a transceiver, and a processor;
wherein the memory is used to store computer programs; the processor is used to read the computer programs in the memory; the transceiver is used to send and receive data under control of the processor and perform the following operations:
sending location assistance information related to a target UE to a location function entity of a Near-RT RIC.

60. The device according to claim 59, wherein the transceiver is further configured to perform:
receiving an assistance information request message sent by the location function entity;
according to the assistance information request message, sending an assistance information response message to the location function entity, wherein the assistance information response message includes the location assistance information.

61. A location device, comprising:
a first obtaining unit configured to obtain a location request message for a target UE;
a second obtaining unit configured to obtain location measurement information related to the target UE according to the location request message;
a first processing unit configured to estimate a location of the target UE to obtain location information according to the location measurement information.

62. A location device, comprising:
a first sending unit configured to send location measurement information related to a target UE to a location function entity of a near real time RAN intelligent Controller (Near-RT RIC).

63. A location device, comprising:
a second sending unit configured to send the location assistance information related to a target UE to a location function entity of a near real time RAN intelligent Controller (Near-RT RIC).

64. A processor-readable storage medium, comprising a computer program stored thereon; wherein the computer program, when executed by a processor, cause the processor to perform the steps of the method according to any one of claims 1 to 24, or perform the steps of the method according to any one of claims 25 to 37, or perform the steps of the method according to any one of claims 38 to 39.
